# FASCICULE DE BREVET EUROPEEN

(11) **EP 0 635 108 B1**
(45) Date de publication et mention de la délivrance du brevet: **21.05.1997**
(21) Numéro de dépôt: 94906237.6
(22) Date de dépôt: 02.02.1994
(51) Int. Cl.: F16L 9/12, F16L 11/127

(54) **CANALISATION MULTICOUCHES EN MATIERE PLASTIQUE**
MEHRSCHICHTIGE LEITUNG AUS KUNSTSTOFF
MULTILAYER PLASTIC DUCT

(30) Priorité: 05.02.1993 FR 9301299; 29.06.1993 FR 9307903
(43) Date de publication de la demande: 25.01.1995
(73) Titulaire: NOBEL PLASTIQUES, F-92000 Nanterre (FR)
(72) Inventeur: DOUCHET, Jean-Claude, F-60150 Plessis-Brion (FR); DESBOIS, Patrick, F-80700 Roye (FR)
(74) Mandataire: Robert, Jean-Pierre
(86) Numéro de dépôt international: FR9400126
(87) Numéro de publication internationale: WO9418485

(56) Documents cités:
- EP-A- 0 428 834
- CH-A- 436 692
- DE-C- 3 821 723
- US-A- 4 196 464

## Description

La présente invention concerne une canalisation en matière plastique pour des fluides existant dans les véhicules automobiles tels que le carburant ou le liquide lave-glace, le liquide de refroidissement du moteur voire le liquide caloporteur pour l'installation de chauffage-climatisation.

Les canalisations aujourd'hui utilisées, lorsqu'elles ne sont plus métalliques, sont essentiellement en polyamide. Ce matériau présente un certain nombre d'inconvénients, notamment du fait de l'alcool qui est nécessairement présent dans les fluides véhiculés. En effet, l'alcool à pour premier effet de faire gonfler le matériau ce qui détruit ses caractéristiques dimensionnelles et conduit à des pertes d'étanchéité ou des contraintes inadmissibles dans les tuyauteries. En outre, l'alcool dissout certains des composants de la conduite et les entraîne dans le reste de l'installation où ils sont une cause d'encrassement.

Pour combattre cet inconvénient on a proposé de revêtir la paroi intérieure de ces canalisations d'une couche barrière fine par exemple en polyoléfine (polypropylène notamment) par coextrusion, voir par exemple DE-C-38 21 723.

Dans d'autres techniques on a également proposé de revêtir la face interne de cette canalisation d'un EVOH (copolymère d'éthylène alcool vinylique) pour la propriété bien connue de ces corps à former une barrière efficace notamment aux solvants organiques. Cependant en présence d'alcool les EVOH ont une tendance à retenir cet alcool et surtout le méthanol.

On a également décrit des produits dans lesquels cette couche est prise en sandwich entre un polyamide épais extérieur et un polyamide fin intérieur.

Dans le domaine des réservoirs de carburant, des travaux concernent l'utilisation de polyéthylène qui est un matériau neutre offrant une bonne résistance à l'alcool. Pour encore améliorer l'étanchéité aux vapeurs, on traite la surface interne de la paraison pour y déposer une fine couche de silice ou de fluor. Cette technique semble donner satisfaction mais reste aujourd'hui onéreuse pour une application à la réalisation de conduites qui, par ailleurs, doivent présenter d'autres caractéristiques notamment en ce qui concerne la tenue mécanique et la tenue au gravillonnage.

La présente invention entend proposer une autre composition de canalisation apte à véhiculer un liquide contenant de l'alcool. Ce liquide peut être du carburant qui contient un alcool additionnel pour diminuer son pouvoir d'auto-inflammation en remplacement du plomb aujourd'hui proscrit. Ce liquide peut également être le liquide lave-glace voire le liquide de refroidissement qui peut comporter jusqu'à 50 % de glycol.

A cet effet l'invention a donc pour objet un tube en matière synthétique à plusieurs couches, fabriqué par coextrusion destiné à véhiculer un carburant de véhicule automobile qui comporte, de l'intérieur vers l'extérieur, une couche en polyéthylène haute densité, une couche d'adhésif copolymère de polyéthylène, d'acide acrylique et/ou d'anhydride maléique, et une couche extérieure en polyamide.

L'utilisation du polyéthylène haute densité est avantageuse car elle constitue une excellente barrière aux alcools et ce de manière peu coûteuse. C'est en effet un matériau neutre beaucoup plus cristallisé que le polyéthylène basse densité, offrant donc naturellement une structure plus compacte dont le franchissement par les molécules d'alcool et d'hydrocarbure est plus difficile. En outre le polyéthylène haute densité présente l'avantage d'une bonne soudabilité pour réaliser soit des cloisonnements à l'intérieur de la canalisation, soit un raccordement avec un dispositif de connexion à rapporter en extrémité de canalisation. A ce propos, on indiquera qu'une épaisseur avantageuse de cette couche intérieure sera de l'ordre de 0,5 à 0,8 millimètres pour que l'assemblage par soudure à des cloisonnements internes ou à un dispositif de connexion en extrémité soit possible.

L'adhésion du polyéthylène haute densité (PEHD) à la couche extérieure de polyamide (PA 11 ou 12) est réalisée par un copolymère polyéthylène, acide acrylique ou anhydride maléique coextrudé avec la couche intérieure et sur une épaisseur de l'ordre de 0,2 mm.

Enfin la couche extérieure en polyamide est utilisée essentiellement pour sa fonction barrière aux hydrocarbures et comme renforcement mécanique et résistant aux agressions abrasives et par chocs du gravillonnage

La conduite ainsi obtenue présente trois couches coextrudées :
- une couche de PEHD sur 0,5 à 0,8 millimètres d'épaisseur,
- une couche adhésive de copolymère polyéthylène, acide acrylique et/ou anhydride maléique sur environ 0,2 millimètres d'épaisseur,
- une couche de polyamide de 0,3 à 0,5 millimètres d'épaisseur, ce qui est nettement inférieur aux conduites en polyamide en monocouche qui ont une couche externe beaucoup plus épaisse (de l'ordre de 1 mm).

Ce produit est de coût moins élevé que les produits connus aujourd'hui tout en présentant des caractéristiques élevées de résistance et d'imperméabilité. En effet la réalisation de la fonction barrière au carburant par deux matériaux permet d'utiliser des matériaux moins coûteux au total qu'un matériau assurant seul la barrière aux alcools et hydrocarbures.

Par ailleurs, le choix d'un polyéthylène comme couche interne est intéressant du fait de sa capacité à être chargé en matériau pulvérulent et notamment en graphite. La couche interne peut alors devenir conductrice et constituer une protection contre les charges électriques statiques de la conduite.

Dans une seconde réalisation de l'invention, la couche interne est en polyéthylène haute densité réticulé. Ainsi, la conduite est réalisée en trois couches coextrudées, dont la couche interne est en polyéthylène réticulable dans les épaisseurs susdites puis l'ensemble (ou au moins la paroi intérieure) est soumise à un traitement à l'eau ou à la vapeur qui provoque la réticulation du polyéthylène. La conduite voit alors sa tenue à la température et son imperméabilité aux hydrocarbures et à l'alcool améliorées. Une telle canalisation trouve une application particulièrement avantageuse dans le circuit de refroidissement par eau du moteur du véhicule où les températures sont voisines de 100°C-150°C. En outre, l'opération de réticulation peut être réalisée alors que la conduite est maintenue en forme. Le produit final est alors sensiblement figé dans cette forme.

## Revendications

1. Tube en matière synthétique à plusieurs couches fabriqué par coextrusion destiné à véhiculer un carburant de véhicule automobile, qui comporte, de l'intérieur vers l'extérieur, une couche en polyéthylène haute densité, une couche d'adhésif copolymère de polyéthylène, d'acide acrylique et/ou d'anhydride maléique, et une couche extérieure en polyamide.

2. Tube selon la revendication 1, caractérisé en ce que le polyéthylène haute densité est réticulé.

3. Tube selon les revendications 1 ou 2, caractérisé en ce que les épaisseurs des couches sont :
- 0,5 - 0,8 mm pour la couche de polyéthylène,
- 0,2 mm pour la couche d'adhésif,
- 0,3 - 0,5 mm pour la couche de polyamide.

4. Tube selon l'une des revendications précédentes, caractérisé en ce que la couche interne est en polyéthylène chargé d'un matériau pulvérulent électriquement conducteur formant ainsi couche anti-statique.

## Patentansprüche

1. Mehrschichtiges, durch Koextrusion hergestelltes Leitungsrohr aus Kunststoffmaterial zum Leiten eines Kraftstoffes für ein Kraftfahrzeug, wobei das Leitungsrohr von innen nach außen gesehen eine Schicht aus Polyethylen hoher Dichte, eine Klebeschicht aus einem Copolymer aus Polyethylen, Acrylsäure und/oder Maleinsäureanhydrid sowie eine äußere Schicht aus Polyamid hat.

2. Leitungsrohr nach Anspruch 1, dadurch **gekennzeichnet**, daß das Polyethylen hoher Dichte vernetzt ist.

3. Leitungsrohr nach Anspruch 1 oder 2, dadurch **gekennzeichnet**, daß die Schichten die folgende Dicke haben:
- 0,5 bis 0,8 mm für die Polyethylenschicht,
- 0,2 mm für die Klebeschicht,
- 0,3 bis 0,5 mm für die Polyamidschicht.

4. Leitungsrohr nach einem der vorhergehenden Ansprüche, dadurch **gekennzeichnet**, daß die innere Schicht aus Polyethylen ist, in das ein pulverförmiges, elektrisch leitfähiges Material eingearbeitet ist, so daß eine antistatische Schicht entsteht.

## Claims

1. A multilayer synthetic material tube manufactured by co-extrusion for carrying motor vehicle fuel, comprising from the inside towards the outside, a first layer is made of high-density polyethylene, a second layer of polyethylene is made of maleic anhydride copolymer adhesive, and an third layer is made of polyamide.

2. A tube according to claim 1, characterized in that the high-density polyethylene is cross-linked.

3. A tube according to claim 1 or claim 2, characterized in that the layer thicknesses are:
polyethylene layer: 0.5 mm to 0.8 mm,
adhesive layer: 0.2 mm,
polyamide layer: 0.3 mm to 0.5 mm.

4. A tube according to claim 1, characterized in that the inner layer is of polyethylene filled with an electrically conductive powder material to form an antistatic layer.
